# FASCICULE DE BREVET EUROPEEN

(11) **EP 0 600 805 B1**
(45) Date de publication et mention de la délivrance du brevet: **05.07.1995**
(21) Numéro de dépôt: 93420456.1
(22) Date de dépôt: 18.11.1993
(51) Int. Cl.: A01K 13/00

(54) **Dispositif de brossage à aspiration et à usage manuel pour l'entretien des pelages d'animaux**
Mit der Hand betätigbarer Viehstriegel mit Absaugvorrichtung
Hand operated curry comb with aspiration meant

(30) Priorité: 30.11.1992 FR 9214603
(43) Date de publication de la demande: 08.06.1994
(73) Titulaire: SEB S.A., 69130 Ecully (FR)
(72) Inventeur: Louison, Bernard, F-42410 Chavanay (FR)

(56) Documents cités:
- CH-A- 304 937
- DE-A- 4 100 398
- FR-A- 2 595 539
- US-A- 5 115 765

## Description

La présente invention se rapporte au domaine technique général des dispositifs et ustensiles de nettoyage et d'entretien du pelage des animaux, et en particulier des animaux domestiques tels que les chiens ou les chats par exemple.

La présente invention concerne un dispositif de brossage à usage manuel comportant un corps principal pourvu d'une série de dents de brossage sur lesquelles est enfilée une grille amovible de récupération des poils.

Les propriétaires d'animaux domestiques, et notamment d'animaux d'espèce canine, sont régulièrement confrontés au problème du nettoyage du pelage de leur animal favori, ainsi qu'à la récupération des poils en vue d'éviter leur dissémination.

Pour résoudre ce problème, il a ainsi déjà été propose de réaliser un dispositif de brossage à usage manuel pourvu d'une série de dents de brossage définissant une surface de brossage. Une grille amovible de récupération des poils est enfilée sur les dents, et généralement sur la totalité de la hauteur des dents. Les dents de brossage sont solidaires d'un support qui est monté avec une possibilité de coulissement suivant l'axe principal des dents de brossage de manière à pouvoir libérer la grille montée amovible sur le corps principal de l'appareil de brossage. Avec un tel dispositif, l'utilisateur après avoir brossé l'animal, procède au déblocage du support des dents de brossage en général par rotation, puis procède à l'escamotage des dents par coulissement axial ce qui a pour effet de libérer la grille de la présence des dents. Les poils de l'animal récupérés et emmélés entre les dents sont alors librement accessibles sur la grille dépourvue de dents. L'utilisateur peut ensuite récupérer facilement les poils évacués pendant le brossage, puisqu'ils reposent librement sur la grille. Après avoir réinséré la grille, un nouveau cycle de brossage peut être effectué.

Un tel dispositif remplit bien évidemment la fonction première pour laquelle il a été conçu, à savoir un brossage du pelage et une récupération des poils morts. Un tel dispositif ne peut cependant pas être considéré comme remplissant complètement la fonction qui lui est normalement dévolue. En effet lors du passage de la brosse dans le pelage de l'animal les dents situées à la périphérie de la surface de brossage ont une action mécanique d'évacuation vers l'extérieur de ladite surface, d'un certain nombre de poils morts. Ces derniers qui ont été déscellés et ramenés à la surface du pelage sont alors libérés et peuvent se déposer dans l'environnement immédiat de l'animal. Les dispositifs de brossage conformes à cette technique connue et largement répandue, ne sont donc pas à même de récupérer la totalité des poils morts portés par un animal. Cet inconvénient conduit à la longue à un dépôt généralisé de poils dans l'ensemble de l'environnement habituel de l'animal. Un tel dépôt est bien évidemment à éviter, d'autant que les poils morts sont en général recouverts au moins partiellement d'une pellicule graisseuse favorisant son adhésion sur tout type de support.

On connait également, par exemple, d'après la demande FR-A-2 595 539, un appareil destiné à nettoyer le pelage des animaux et apte à être raccordé à un aspirateur. L'appareil comporte un raccord délimitant une chambre d'aspiration à l'intérieur de laquelle sont montés un peigne, une brosse et un dispositif de pulvérisation. Le niveau de bruit généré par un tel appareil rend son utilisation délicate pour un grand nombre d'animaux, qui dans la mesure où ils le tolèrent, sont néanmoins rendus nerveux par le bruit. L'opération de nettoyage devient alors difficile et est globalement peu efficace. Par ailleurs, les dispositions relatives du peigne, de la brosse et du flux d'aspiration conduisent à une récupération et aspiration insuffisantes des poils morts, dont une certaine proportion se dépose dans l'environnement immédiat de l'animal.
On connait aussi, d'après la demande CH-A-304937, un appareil de brossage avec des dents de grattage et une grille amovible de récupération et apte à être raccordé à un aspirateur.

L'objet de l'invention vise précisément à résoudre les inconvénients mentionnés précedemment et à fournir un dispositif de brossage à usage manuel favorisant une accumulation des poils morts au niveau des dents de brossage et évitant une projection et une dissémination extérieure des poils morts situés au voisinage de la zone de brossage.

Un objet complémentaire de l'invention vise à fournir un dispositif de brossage améliorant l'opération proprement dite de brossage tout en évitant de provoquer un emmêlement des poils constituant le pelage de l'animal.

Un autre objet de l'invention vise à fournir un dispositif de brossage qui soit supporté et accepté par l'animal, et capable d'assurer rapidement l'entretien du pelage de l'animal.

Les objets assignés à l'invention sont atteints à l'aide d'un dispositif de brossage à usage manuel pour l'entretien du pelage d'animaux comportant un corps principal incluant :
- une série de dents de grattage se dressant à partir d'un support et délimitant une surface de grattage ;
- une grille amovible de récupération des poils enfilée sur les dents au moins sur une partie de leur profondeur, caractérisée en ce que :
   * un moyen d'aspiration est monté dans le corps principal derrière la surface de grattage, ledit moyen étant relié à une source d'énergie pour générer un flux d'aspiration
   * la grille de récupération s'étend sur une surface supérieure à la surface de grattage de manière à former à la périphérie de la surface de grattage une ceinture annulaire dépourvue de dents et soumise au flux d'aspiration.

Les caractéristiques et avantages de l'invention ressortiront mieux à la lecture de la description donnée ci-après, à titre d'exemple non limitatif, en référence aux dessins annexés dans lesquels :
- La figure 1 montre selon une vue en perspective, un dispositif de brossage conforme à l'invention.
- La figure 2 montre selon une coupe transversale, un dispositif de brossage conforme à l'invention.
- La figure 3 représente selon une demi-coupe transversale un dispositif de brossage conforme à l'invention montrant les emboîtements respectifs des différentes parties constituant le dispositif.

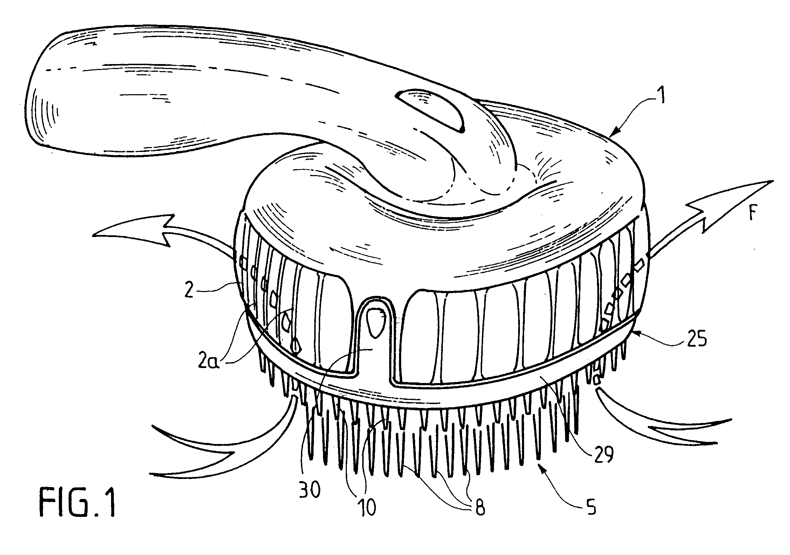

Le dispositif de brossage manuel conforme à l'invention tel que représenté aux Figures 1 à 3 comporte un corps principal 1 constitué par exemple d'une enveloppe en forme de coque définissant un volume de révolution autour d'un axe x-x'. Dans l'exemple préférentiel montré aux figures 1 à 3, le corps principal 1 est fermé à sa partie supérieure et possède une enveloppe latérale 2 présentant un léger renflement vers l'extérieur. L'enveloppe latérale 2 est pourvue d'ouvertures munies d'ailettes 2a d'éjection d'air, de préférence inclinées, mettant ainsi en relation avec l'extérieur le volume interne du corps principal 1. Ce dernier est pourvu intérieurement d'une volute interne 1b servant de cloisonement interne au corps principal 1 de manière à définir un volume inférieur 1c et un volume supérieur 1d. Le corps principal 1 peut être réalisé en tous matériaux et en particulier en matériaux plastiques.

Le volume inférieur 1c est fermé par une brosse étrille 5 comportant dans sa partie centrale un support formant une paroi pleine, telle qu' un disque 6, pourvu à sa périphérie d'une série de bras radiaux 7. Le disque 6 sert de support à une série de dents de grattage 8, insérées et fixées par exemple dans la masse du disque 6, et se dressant régulièrement ou non, de préférence perpendiculairement à partir de la face externe dudit disque 6. Les dents 8 sont de préférence métalliques, et de préférence de longueur identique. Avantageusement, le disque 6 présente pour faciliter le grattage une courbure caractéristique régulière dont la concavité est tournée vers le volume infèrieur 1c. De manière avantageuse, les dents 8 couvrent sensiblement régulièrement l'ensemble de la surface du disque 6, et délimitent ainsi par leur extrémité une surface de grattage sensiblement équivalente à la surface du disque 6. Les dents de grattage 8 peuvent également être réalisées en un matériau de type plastique par exemple. La section des dents 8 peut être circulaire, ovoïde, triangulaire ou carrée suivant le type de fonctions qu'elles doivent assurer, les dents de section triangulaires ou carrées étant par exemple particulièrement recommandées pour la fonction de démêlage. Les dents 8 sont implantées et maintenues dans le disque 6, par tous moyens connus, et par exemple par surmoulage. Il est également envisageable de modifier la forme de la partie terminale des dents 8, en leur donnant par exemple une forme tronconique ou même sphérique. Dans ce dernier cas la longueur active de la dent 8 peut atteindre trois fois son diamètre de base. Avantageusement, les dents 8 peuvent être revêtues de tous matériaux facilitant le glissement dans le pelage de l'animal et réduisant leur usure.

La brosse étrille 5 est complétée par une pièce annulaire périphérique 9, solidaire de l'extrémité des bras radiaux 7 et dans laquelle sont découpées une série de dents de peignage 10. Avantageusement, les dents de peignage 10 forment une rangée périphérique de dents ceinturant complètement les dents de grattage 8. En vue d'éviter une interaction négative entre les dents de grattage 8 et les dents de peignage 10 lors du passage desdites dents dans le pelage de l'animal, il est avantageux de prévoir, tel que cela est montré aux Figures 1 à 3, que les dents de peignage 10 s'étendent, sensiblement à partir d'un même plan d'extension que les dents de grattage 8, mais sur une hauteur totale inférieure. La pièce annulaire périphérique 9 peut être réalisée lors du moulage de l'ensemble de la brosse étrille 5, et être constitué par exemple d'une matière plastique à base de polyamide chargée en fibre de verre à 20 ou 30 %.

La brosse étrille 5 est fixée de manière amovible sur le corps principal 1 à l'aide de tous moyens de verrouillage-déverrouillage connus, et par exemple à l'aide d'un système de verrouillage-déverrouillage à baïonnette. A cet effet, des nervures de fixation 11 peuvent être ménagés à la périphérie et dans la partie supérieure de la pièce annulaire périphérique 9.

Le dispositif de brossage conforme à l'invention comporte un moyen d'aspiration 15 monté de préférence dans le volume inférieur 1c du corps principal 1, derrière le disque 6. Le moyen d'aspiration 15 est constitué par exemple d'une hélice profilée dont les pales 16 s'étendent, au moins en partie, au droit des bras radiaux 7. Le moyen d'aspiration 15 est solidaire d'un moyeu 17 calé angulairement sur un axe d'entrainement 18 relié à une source d'énergie 19, constituée par exemple d'un moteur électrique. La source d'énergie 19 est intégrée et maintenue en place de manière connue à l'intérieur d'un compartiment et s'étend au moins en partie dans le volume interne supérieur 1d du corps principal 1. De manière connue en soi, la source d'énergie 19 est reliée par une série de fils de connexion (non représentés aux figures), à une source d'alimentation électrique pouvant être indiféremment le réseau secteur, ou un ensemble de piles ou un accumulateur.

Les pales 16 s'étendent radialement à partir du moyeu 17, au-dessus de l'espace annulaire périphérique situé au droit des bras radiaux 17, de manière à balayer de préférence en totalité ledit espace annulaire lors de la rotation du moyen d'aspiration 15. Le flux d'aspiration F ainsi créé est fortement augmenté et peut même être accentué en conformant de manière appropriée les parois de la volute interne 1b pour créer une cheminée d'aspiration périphérique.

Le dispositif de brossage conforme à l'invention comporte également une grille de récupération 25 de maillage adapté pour être enfilé et monté de manière amovible sur les dents de brossage 8 en vue d'assurer la récupération des poils de l'animal. La grille de récupération 25 est réalisée par exemple en un matériau métallique, et s'étend sur une surface supérieure à la surface de brossage définie par les dents de brossage 8, de manière à couvrir en totalité l'espace annulaire périphérique situé au droit des bras radiaux 7. Dans l'exemple de réalisation montré aux Figures 1 à 3, la grille de récupération 25 est circulaire et présente une zone centrale 26 perforée, déstinée à être enfilée sur les dents de grattage 8, et une ceinture annulaire 27 déstinée à recouvrir la totalité de l'espace annulaire situé sous les bras radiaux 7 et au droit de ces derniers. Les limites extérieures de la grille de récupération 25 sont constituées par une rangée périphérique d'orifices 28 déstinés à être enfilés sur les dents de peignage 10, et par un rebord 29 déstiné à venir en appui contre la partie inférieure du corps principal 1.

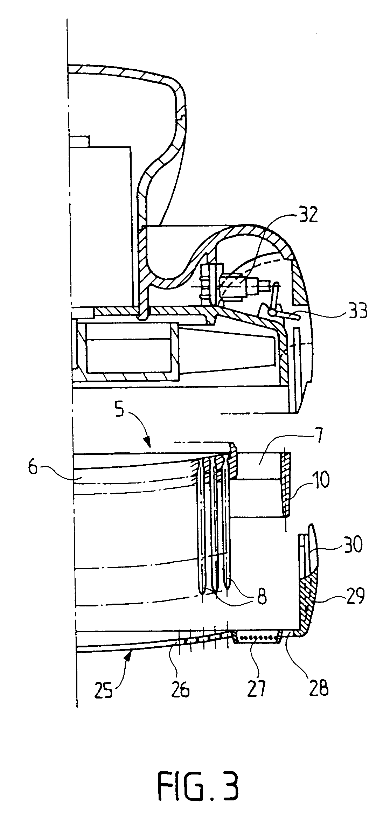

La fixation de la grille de récupération 25 sur le corps principal peut être assurée à l'aide d'au moins deux doigts 30 disposés de préférence de manière symétrique par rapport à l'axe x-x', et assurant le verrouillage de ladite grille. Avantageusement les doigts 30 assument également une fonction de pré-centrage de la grille de récupération 25 lors de leur mise en place dans des évidements correspondant ménagés dans le corps principal 1. Les doigts 30 sont pourvus de tous moyens de verrouillage connus et permettant leur verrouillage sur des moyens de verrouillage complémentaires ménagés dans le corps principal 1. A titre de variante, il peut être prévu tel que cela est montré à la figure 3 de disposer dans le corps principal 1 un interrupteur électrique 32 en contact avec un volet à bascule 33 actionné par l'un des doigts 30 lors de la mise en place de la grille de récupération 25. Une telle réalisation permet la mise en marche automatique de l'appareil lors de la mise en place de la grille de récupération 25 et assure également automatiquement son arrêt dès l'extraction de la grille de récupération 25.

Le dispositif de brossage conforme à l'invention est complété par une poignée de préhension 40 prolongeant le corps principal 1.

Le fonctionnement du dispositif de brossage conforme à l'invention est le suivant.

Après avoir mis en route le moyen d'aspiration 15 à l'aide par exemple d'un bouton de mise en marche, l'utilisateur saisit le dispositif de brossage par la poignée 40, puis applique le dispositif contre le pelage de l'animal. Au cours du passage des dents de grattage 8 contre le pelage de l'animal, les poils morts ou de renouvellement poussés par les dents de grattage 8 en dehors de la surface de brossage sont aspirés à la périphérie de la surface de brossage par le flux d'aspiration F créé par la rotation des pales 16 et passant à travers la ceinture annulaire 27 . Les poils non soumis à l'action du flux d'aspiration mais subissant l'effet des dents de grattage 8 sont simultanément plaqués contre la grille 25, et viennent progressivement s'accumuler entre les dents 8 sur toute la surface de brossage. Au cours du cycle de brossage, les poils qui ne sont pas retenus ou suffisamment retenus par les dents 8 sont évacués vers la périphérie de la surface de brossage et aspirés et plaqués contre la grille de récupération 25 au niveau de la ceinture annulaire 27. Il n'y a donc pas de risque de dispersion des poils vers l'extérieur. Simultanément à l'action de brossage, la partie du pelage de l'animal libérée de l'action des dents de grattage 8 est soumise à l'action des dents de peignage 10, qui n'assurent qu'une remise en forme et un lustrage superficiel des poils.

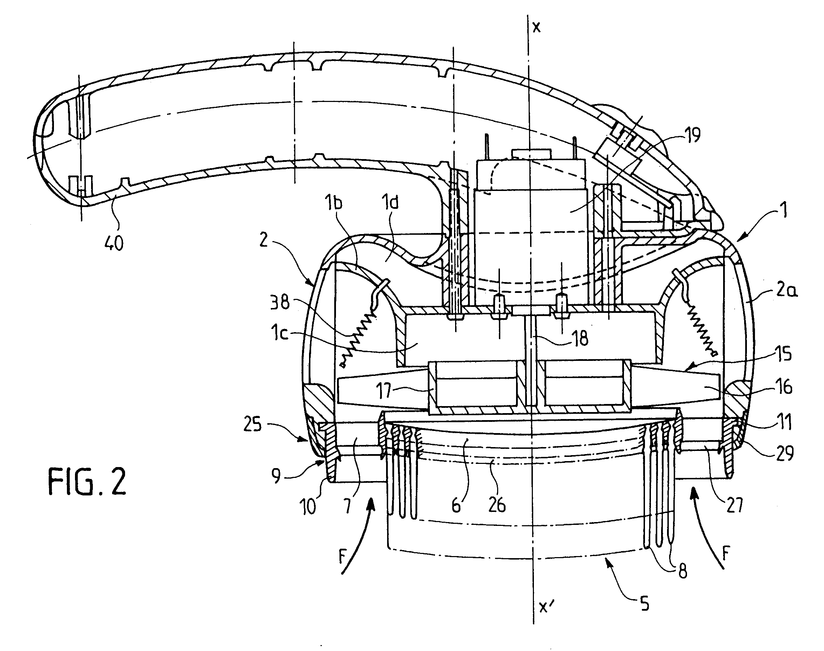

Il est également possible d'envisager tel que montré à la figure 2 le montage de résistances chauffantes 38 dans le volume intérieur du corps principal 1. Les résistances chauffantes 38 sont avantageusement montées dans le trajet ascendant du flux d'aspiration F au droit de la ceinture annulaire 27. Tel que cela est représenté à la figure 3 les résistances chauffantes 38 sont disposées audessus du moyen d'aspiration 15. Le fonctionnement d'un dispositif de brossage incluant des résistances chauffantes 38 nécessite d'inverser le sens de rotation du moyen d'aspiration 15 dont les pales 16 assurent alors l'expulsion de l'air chaud selon un trajet descendant, à travers la ceinture annulaire 27 en direction du pelage de l'animal. Dans cette application l'utilisateur peut, immédiatement après le lavage du pelage de l'animal, utiliser le dispositif conforme à l'invention non seulement pour assurer l'évacuation des poils résiduels, ainsi que le lustrage du pelage, mais également selon le mode de fonctionnement impliquant un chauffage, en vue d' assurer rapidement le sèchage du pelage.

Dans toutes les variantes décrites précédemment, l'utilisateur effectue le nettoyage du dispositif, par extraction de la grille de récupération 25 hors de la brosse étrille 5. Au cours de cette extraction la grille de récupération 25 assure, par coulissement axial sur les dents de grattage 8 et sur les dents de peignage 10, la récupération des poils emmêlés dans lesdites dents. L'utilisateur n'a plus alors qu'à récupérer les poils présents sur la grille de récupération 25 puis après remise en place par clipsage de ladite grille, a recommencer un nouveau cycle de brossage.

Le dispositif de brossage conforme à l'invention présente l'avantage d'éviter la dispersion des poils morts dans l'environnement de l'animal, dans la mesure ou les poils non fixés par les dents de grattage 8 sont dirigés vers la périphérie de la surface de brossage où ils sont aspirés et plaqués contre la ceinture annulaire 27. Il n'y a donc plus comme dans les systèmes de l'art antérieur, de dissémination des poils morts non retenus. En outre, le flux d'aspiration F est concentré périphériquement sur une surface limitée contribuant à créer un flux d'aspiration optimal.

## Revendications

1. Dispositif de brossage à usage manuel pour l'entretien du pelage d'animaux comportant un corps principal (1) incluant :
- une série de dents de grattage (8) se dressant à partir d'un support (6) et délimitant une surface de grattage ;
- une grille amovible de récupération (25) des poils enfilée sur les dents (8) au moins sur une partie de leur profondeur, caractérisée en ce que
* un moyen d'aspiration (15) est monté dans le corps principal (1) derrière la surface de grattage, ledit moyen étant relié à une source d'energie (19) pour générer un flux d'aspiration (F)
* la grille de récupération (25) s'étend sur une surface supérieure à la surface de grattage de manière à former à la périphérie de la surface de grattage une ceinture annulaire (27) dépourvue de dents et soumise au flux d'aspiration (F).

2. Dispositif selon la revendication 1 caractérisé en ce que la ceinture annulaire (27) s'étend sur la totalité de la périphérie de la surface de grattage.

3. Dispositif selon les revendications 1 ou 2 caractérisé en ce que le support (6) des dents de grattage (8) est constitué d'une paroi pleine, imperméable au passage du flux d'aspiration (F), présentant de préférence une courbure.

4. Dispositif selon l'une des revendications précédentes caractérisé en ce qu'il comporte des dents de peignage (10) disposées à la périphérie externe de la ceinture annulaire (27) et entourant ladite ceinture annulaire (27).

5. Dispositif selon la revendication 4 caractérisé en ce que les dents de peignage (10) s'étendent sur une hauteur totale inférieure à celle des dents de grattage (8) et forment de préférence une rangée périphérique entourant complètement la ceinture annulaire (27).

6. Dispositif selon la revendication 4 ou la revendication 5 caractérisé en ce que les dents de peignage (10) sont découpées dans une pièce annulaire périphérique (9) solidaire du support (6) par l'intermédiaire de bras radiaux (7).

7. Dispositif selon l'une des revendications précédentes caractérisé en ce que le corps principal (1) comporte intérieurement des résistances chauffantes (38) disposées dans le flux d'aspiration (F) de préférence au droit de la ceinture annulaire (27) et reliées à la source d'énergie (19).

8. Dispositif selon l'une des revendications précédentes, en particulier selon la revendication 4, caractérisé en ce que la grille de récupération (25) est fixée de manière amovible par clipsage, sur le corps principal (1).

9. Dispositif selon la revendication 8 caractérisé en ce que la grille de récupération (25) comporte au moins deux doigts de précentrage (30) pourvus de moyens de verrouillage déstinés à venir se verrouiller sur des moyens de verrouillage complémentaires ménagés dans le corps principal (1).

10. Dispositif selon l'une des revendications précédentes caractérisé en ce que le moyen d'aspiration (10) est formé par une hélice montée à rotation dans le corps principal (1).

## Claims

1. A manual brush device for grooming animals, the device comprising a main body (1) including:
a series of scratching teeth (8) extending from a support (6) and defining a scratching surface; and
a removable hair-recovery grid (25) threaded over the teeth (8) over at least a fraction of their length; characterized in that:
suction means (15) are mounted in the main body (1) behind the scratching surface, said suction means being connected to a drive source (19) for generating a suction flow (F); and
the hair-recovery grid (25) extends over an area greater than the scratching surface so as to form an annular belt (27) around the periphery of the scratching surface in which there are no teeth but which is subjected to the suction flow (F).

2. A device according to claim 1, characterized in that the annular belt (27) extends around the entire periphery of the scratching surface.

3. A device according to claim 1 or 2, characterized in that the support (6) for the scratching teeth (8) is constituted by a solid wall that is impermeable to the suction flow (F) and that is preferably curved.

4. A device according to any preceding claim, characterized in that it includes comb teeth (10) disposed at the outer periphery of the annular belt (27) and surrounding said annular belt (27).

5. A device according to claim 4, characterized in that the comb teeth (10) extend over a total height that is less than the height of the scratching teeth (8) and preferably form a peripheral row completely surrounding the annular belt (27).

6. A device according to claim 4 or claim 5, characterized in that the comb teeth (10) are cut out in a peripheral annular part (10) that is secured to the support (6) by means of radial arms (7).

7. A device according to any preceding claim, characterized in that the main body (1) includes internal heating resistances (38) disposed in the suction flow (F) preferably over the annular belt (27) and connected to the drive source (19).

8. A device according to any preceding claim, in particular claim 4, characterized in that the recovery grid (25) is removably fixed by snap-fastening on the main body (1).

9. A device according to claim 8, characterized in that the recovery grid (25) includes at least two pre-centering fingers (30) provided with locking means designed to lock with complementary locking means provided on the main body (1).

10. A device according to any preceding claim, characterized in that the suction means (10) are formed by a fan rotatably mounted in the main body (1).

## Patentansprüche

1. Handbedientes Bürstengerät für die Pflege von Tierfellen, mit einem Hauptkörper (1) mit einer Anzahl von sich von einem Stützträger (6) aufrichtenden und eine Kratzfläche bestimmenden Kratzzähnen (8) und einem abnehmbaren, wenigstens auf einen Teil der Höhe der Zähne (8) aufgesetzten Auffanggitter (25) zum Sammeln der Haare, dadurch gekennzeichnet, daß im Inneren des Hauptkörpers (1) hinter der Kratzfläche ein Saugmittel (15) angeordnet ist, wobei letzteres zur Erzeugung eines Saugstroms (F) an eine Energiequelle angeschlossen ist, und, daß sich das Auffanggitter (25) über die Kratzfläche hinaus erstreckt, so daß entlang des Außenumfangs der Kratzfläche eine äußere, ringförmige, dem Saugstrom (F) ausgesetzte Umfangszone (27) ohne Zähne gebildet wird.

2. Gerät nach Anspruch 1 dadurch gekennzeichnet, daß sich die ringförmige Umfangszone (27) umlaufend über den gesamten Außenumfang der Kratzfläche erstreckt.

3. Gerät nach Anspruch 1 oder 2, dadurch gekennzeichnet, daß der Stützträger (6) der Kratzzähne (8) durch eine durchgehende, den Saugstrom (F) nicht durchlassende, vorzugsweise mit einer Wölbung versehene Wandung gebildet ist.

4. Gerät nach einem der vorangehenden Ansprüche, dadurch gekennzeichnet, daß am Außenumfang der ringförmigen Randzone (27) diese umgebende Kämmzähne (10) angeordnet sind.

5. Gerät nach Anspruch 4, dadurch gekennzeichnet, daß sich die Kämmzähne (10) auf eine geringere Gesamthöhe erstrecken als die Kratzzähne (8) und die gesamte ringförmige Umfangszone (27) vorzugsweise linienförmig umlaufend umgeben.

6. Gerät nach Anspruch 4 oder 5, dadurch gekennzeichnet, daß die Kämmzähne (10) aus einem ringförmigen, mit dem Stützträger (6) über radial gerichtete Arme (7) verbundenen Umfangsteil herausgeschnitten sind.

7. Gerät nach einem der vorangehenden Ansprüche, dadurch gekennzeichnet, daß mit der Energiequelle (19) verbundene Heizwiderstände (38) im Inneren des Hauptkörpers (1) im Saugstrom (F), vorzugsweise der ringförmigen Umfangszone (27) gegenüberliegend angeordnet sind.

8. Gerät nach einem der vorangehenden Ansprüche, dadurch gekennzeichnet, daß das Auffanggitter (25) durch Klemmen auf dem Hauptkörper (1) abnehmbar befestigt ist.

9. Gerät nach Anspruch 8, dadurch gekennzeichnet, daß das Auffanggitter (25) mindestens zwei Vorzentrierungsfinger (30) aufweist, welche mit Verriegelungsmitteln zur Verriegelung mit zugehörigen, im Hauptkörper (1) angeordneten Verriegelungsmitteln versehen sind.

10. Gerät nach einem der vorangehenden Ansprüche, dadurch gekennzeichnet, daß das Saugmittel (10) durch ein im Hauptkörper (1) drehbar angeordnetes Flügelrad gebildet ist.
